# DEMANDE DE BREVET EUROPEEN

(11) **EP 1 443 373 A2**
(43) Date de publication de la demande: **04.08.2004**
(21) Numéro de dépôt: 03292908.5
(22) Date de dépôt: 24.11.2003
(51) Int. Cl.: G05B 19/23

(54) **Système d'actionnement comprenant un capteur numérique de position**

(30) Priorité: 04.12.2002 FR 0215280
(71) Demandeur: S.N.R. ROULEMENTS, 74010 Annecy Cédex (FR)
(72) Inventeur: Nicot, Christophe, 74600 Quintal (FR); Ballas, Gérard, 01350 Culoz (FR)
(74) Mandataire: Geismar, Thierry

(57) **Abrégé**

L'invention concerne un système d'actionnement du type comprenant un moteur électrique (1) commandé par un calculateur (2) en fonction d'une consigne de position de l'organe à actionner, ledit système comprenant un codeur (3) solidaire du mouvement du moteur (1), un capteur agencé pour délivrer deux signaux digitaux de position (A, B) carrés en quadrature qui sont représentatifs de la position du codeur (3), un dispositif de traitement (5) des signaux (A, B) apte à déterminer la position réelle du codeur (3) et un dispositif de comparaison (6) de la position réelle du codeur (3) avec la position du codeur (3) qui correspond théoriquement à la consigne appliquée.

L'invention concerne également des procédés d'actionnement d'un organe au moyen d'un tel système et l'application d'un tel système pour l'actionnement d'un doseur de carburant d'un moteur thermique.

## Description

L'invention concerne un système d'actionnement d'un organe ainsi que des procédés d'actionnement d'un organe au moyen d'un tel système.

L'invention concerne également l'application d'un tel système pour l'actionnement d'un doseur de carburant d'un moteur thermique, notamment d'une turbine aéronautique.

Dans le cadre de cette application, il est connu d'utiliser un système d'actionnement comprenant un moteur électrique, par exemple du type pas à pas, qui comprend un dispositif de transmission du mouvement du moteur électrique à un volet d'alimentation du moteur thermique en carburant. Le moteur électrique est commandé par un calculateur qui est agencé pour réguler le courant d'alimentation du moteur électrique en fonction d'une consigne de position du volet qui est issue de la commande d'accélération actionnée par le pilote, de sorte à alimenter le moteur thermique avec la quantité de carburant voulue.

Il a été proposé de sécuriser un tel actionnement en comparant le mouvement réel du moteur électrique et le mouvement correspondant théoriquement à la consigne appliquée, de sorte à détecter en temps réel une éventuelle anomalie d'actionnement.

Pour ce faire, on a proposé de mesurer le mouvement réel du moteur électrique au moyen d'un capteur de type resolver qui délivre une information d'angle absolu du rotor du moteur électrique sous la forme de signaux analogiques.

L'intégration de ce type de capteur dans un système d'actionnement pose de nombreux problèmes. En effet, du fait de leur technologie de réalisation qui nécessite un rotor et un stator composés éventuellement de plusieurs bobinages formés de fils enroulés sur une carcasse métallique, les capteurs de type resolver sont particulièrement encombrants et lourds. D'autre part, le volume nécessaire à leur intégration impose souvent de les monter sur un rotor parallèle à celui du moteur électrique. Par conséquent, notamment pour des systèmes d'actionnement de petite taille, le capteur devient aussi encombrant que le moteur électrique et contribue de façon importante à la masse totale du système d'actionnement.

En outre, l'information de position délivrée étant de nature analogique, le système d'actionnement doit comprendre un étage de conversion analogique-numérique à l'entrée du calculateur afin de pouvoir exploiter ladite information.

Par ailleurs, notamment dans le cadre de l'application considérée, il est indispensable d'obtenir un actionnement fiable et précis, et ce dans des conditions d'utilisation sévères en terme de vibrations, de températures et de pressions.

Les capteurs de type resolver, notamment du fait du grand nombre d'éléments qui les composent et de la présence d'un étage de conversion analogique-numérique supplémentaire dans le calculateur, ne remplissent pas ces contraintes de façon optimale, notamment en terme de fiabilité.

Et, il en est de même pour les capteurs de type résistif dont la fiabilité est fortement affectée par des conditions d'utilisation sévères.

L'invention vise à résoudre l'ensemble des problèmes mentionnés ci-dessus en proposant notamment un système d'actionnement pourvu de moyens délivrant, de façon précise et fiable, une information de position représentative des déplacements du moteur électrique, ladite information étant sous la forme de signaux numériques et lesdits moyens étant facilement intégrables dans le système d'actionnement.

A cet effet, et selon un premier aspect, l'invention propose un système d'actionnement du type comprenant un moteur électrique commandé par un calculateur qui est agencé pour réguler le courant d'alimentation du moteur électrique en fonction d'une consigne de position de l'organe à actionner, ledit système comprenant un dispositif de transmission du mouvement du moteur électrique à l'organe, dans lequel le dispositif de transmission comprend un codeur solidaire du mouvement du moteur électrique, ledit codeur comprenant une piste multipolaire principale, et le système comprenant :
- un capteur fixe comprenant au moins deux éléments sensibles qui sont disposés en regard et à distance d'entrefer de la piste principale, ledit capteur étant agencé pour délivrer deux signaux digitaux de position A, B carrés en quadrature qui sont représentatifs de la position du codeur ;
- un dispositif de traitement des signaux A, B qui comprend des moyens de comptage aptes à déterminer, à partir d'une position initiale, la position réelle du codeur ;
- un dispositif de comparaison de la position réelle du codeur avec la position du codeur qui correspond théoriquement à la consigne appliquée.

Suivant une réalisation, le dispositif de comparaison comprend des moyens d'alerte qui, lors de la détermination d'un écart significatif entre la position réelle et la position théorique, sont agencés pour émettre un signal d'anomalie de fonctionnement du système d'actionnement.

Selon un deuxième aspect, l'invention propose un procédé d'actionnement d'un organe au moyen d'un tel système d'actionnement, qui comprend les étapes itératives prévoyant de :
- appliquer au calculateur une consigne de position de l'organe ;
- déterminer la position réelle du codeur ;
- comparer la position réelle du codeur avec la position du codeur correspondant théoriquement à la consigne appliquée ;
- si l'écart entre la position réelle et la position théorique est supérieure à un seuil, activer les moyens d'alerte.

Suivant une autre réalisation, le dispositif de comparaison comprend une boucle d'asservissement de l'actionnement qui est pilotée en fonction de l'écart déterminé entre la position réelle et la position théorique.

Selon un troisième aspect, l'invention propose un procédé d'actionnement d'un organe au moyen d'un tel système d'actionnement, qui comprend les étapes itératives prévoyant de :
- appliquer au calculateur une consigne de position de l'organe ;
- déterminer la position réelle du codeur ;
- comparer la position réelle du codeur avec la position du codeur correspondant théoriquement à la consigne appliquée ;
- si l'écart entre la position réelle et la position théorique est supérieure à un seuil, piloter la boucle d'asservissement de sorte à appliquer au calculateur une consigne de position asservie à l'écart.

Selon un quatrième aspect, l'invention propose l'application d'un système d'actionnement suivant l'invention, pour l'actionnement d'un doseur de carburant d'un moteur thermique.

D'autres objets et avantages de l'invention apparaîtront au cours de la description qui suit, faite en référence aux dessins annexés, dans lesquels :
- les figures 1 et 2 sont des schémas fonctionnels d'un système d'actionnement en rotation respectivement suivant un premier et un deuxième mode de réalisation de l'invention ;
- la figure 3a et 3b sont des schémas fonctionnels d'un système d'actionnement en translation suivant un mode de réalisation de l'invention, respectivement vue perpendiculairement et parallèlement à l'axe d'actionnement ;
- la figure 4 est une vue en coupe longitudinale d'un système d'actionnement pour doseur de carburant d'un moteur thermique ;
- la figure 5 est une vue en coupe suivant la ligne V-V de la figure 4.

L'invention concerne un système d'actionnement comprenant un moteur électrique 1, par exemple du type pas à pas, qui est commandé par un calculateur 2 agencé pour réguler le courant d'alimentation du moteur 1 en fonction d'une consigne.

Le système est destiné à actionner un organe par l'intermédiaire d'un dispositif de transmission du mouvement du moteur 1 audit organe. L'actionnement est alors obtenu en commandant le moteur 1 avec une consigne de position de l'organe à actionner, ladite consigne étant agencée pour, en fonction de la nature du dispositif de transmission, déplacer l'organe dans la position souhaitée.

Dans une application particulière, le système est destiné à actionner un doseur de carburant d'un moteur thermique, notamment d'une turbine aéronautique. A cet effet, le dispositif de transmission permet d'actionner un volet d'alimentation du moteur thermique en carburant et la consigne est issue de la commande d'accélération qui est actionnée par le pilote.

Pour connaître le mouvement réel du dispositif de transmission qui est induit par la consigne, l'invention propose d'intégrer dans le système d'actionnement un codeur 3 pourvu d'une piste multipolaire principale qui est solidaire du mouvement du moteur 1 et un capteur 4 apte à délivrer deux signaux numériques qui sont représentatifs de la position dudit codeur et donc des mouvements du moteur électrique 1.

Dans un exemple particulier, le codeur 3 est formé d'une pièce magnétique multipolaire sur laquelle est aimantée une pluralité de paires de pôles Nord et Sud équiréparties avec une largeur angulaire constante de sorte à former la piste principale. Dans un exemple de réalisation, le codeur 3 est formé d'une pièce en élastomère qui est chargée de particules magnétiques, par exemple en ferrite tel que les ferrites de baryum ou de strontium.

Le capteur 4 est fixe et comprend au moins deux éléments sensibles qui sont disposés en regard et à distance d'entrefer de la piste principale de sorte à délivrer deux signaux électriques S1, S2 périodiques en quadrature. Le capteur 4 comprend en outre des moyens de numérisation des signaux S1, S2 de sorte à délivrer deux signaux digitaux de position A, B carrés en quadrature qui sont représentatifs de la position du codeur 3.

Dans un exemple particulier, les éléments sensibles sont choisis dans le groupe comprenant les sondes à effet Hall, les magnétorésistances, les magnétorésistances géantes.

Le principe d'obtention des signaux S1 et S2 à partir d'une pluralité d'éléments sensibles alignés est par exemple décrit dans le document FR-2 792 403 issu de la demanderesse. En particulier, cette réalisation permet d'obtenir des signaux de position qui ne dépendent pas de l'amplitude du champ magnétique lu et qui sont donc insensibles aux variations d'entrefer dues au déplacement du codeur 3 ainsi qu'à la décroissance du champ magnétique due à la température.

Mais des capteurs 4 comprenant deux éléments sensibles qui sont aptes à délivrer les signaux S1 et S2 sont également connus.

Suivant une réalisation, par exemple décrit dans le document FR-2 754 063 issu de la demanderesse, le capteur 4 comprend des moyens d'interpolation des signaux qui permettent d'augmenter la résolution des signaux digitaux de sortie A, B de sorte à pouvoir utiliser un nombre de paires de pôles réduit. Ainsi, on peut utiliser un niveau d'induction magnétique important ce qui permet d'augmenter d'une part la robustesse de fonctionnement du système d'actionnement vis-à-vis des conditions sévères d'utilisation et d'autre part la résolution des signaux de position, et ce sans augmenter l'encombrement du codeur 3.

Le système d'actionnement comprend en outre un dispositif de traitement 5 des signaux A, B qui comprend des moyens de comptage apte à déterminer, à partir d'une position initiale, la position réelle du codeur 3.

Dans un exemple de réalisation, les moyens de comptage comprennent un registre dans lequel la valeur de la position du codeur 3 est incrémentée ou décrémentée d'une valeur correspondant au nombre de fronts des signaux A, B qui sont détectés.

Le capteur 4 et le dispositif de traitement 5 peuvent être intégrés sur un substrat en silicium ou équivalent par exemple AsGa, de sorte à former un circuit intégré et personnalisé pour une application spécifique, circuit parfois désigné sous le terme ASIC pour faire référence au circuit intégré conçu partiellement ou complètement en fonction des besoins.

Suivant une première réalisation, la position initiale est fixée à zéro lors de la mise en service du système d'actionnement. Ainsi, le dispositif de traitement 5 permet de connaître la position relative du codeur 3 par rapport à la position initiale, c'est-à-dire la distance séparant la position du codeur 3 d'une position initiale quelconque et variable par rapport à un référentiel fixe.

Suivant une deuxième réalisation, le dispositif de traitement 5 est agencé pour délivrer la position absolue du codeur 3. On entend par position absolue la distance séparant la position du codeur 3 à un instant donné, d'une position de référence du codeur 3, cette position de référence étant fixe et donnée par rapport à un référentiel fixe. A cet effet, le système comprend des moyens de détermination d'une position de référence et le dispositif de traitement 5 comprend des moyens aptes, lors de la détection de ladite position de référence, à affecter ladite position de référence en tant que position initiale.

Suivant un premier mode de réalisation, les moyens de détermination de la position de référence sont intégrés au codeur 3. A cet effet, le codeur 3 comprend en outre une singularité qui est indexée à une position de référence du codeur 3 et le capteur comprend en outre au moins un élément sensible agencé pour détecter ladite singularité. En particulier, le codeur 3 peut comprendre une piste multipolaire dite top tour qui est pourvue de la singularité, au moins un élément sensible étant disposé en regard et à distance d'entrefer de ladite piste top tour de sorte à délivrer un signal digital C comprenant une impulsion. Le dispositif de traitement 5 comprend alors des moyens aptes, lors de la détection de l'impulsion, à affecter la position de référence en tant que position initiale. Un principe d'obtention des signaux digitaux A, B et C, ainsi que différents modes de réalisation d'une singularité magnétique, sont décrits dans les documents FR-2 769 088 et EP-0 871 014. En particulier, la singularité magnétique de la piste top tour peut être formée de deux pôles adjacents dont la transition magnétique est différente des autres.

Suivant un deuxième mode de réalisation, les moyens de détermination de la position de référence sont intégrés dans le dispositif de transmission. A cet effet, le dispositif de transmission peut comprendre une butée qui est agencée pour interrompre le mouvement du moteur 1 dans une position de référence du codeur 3 et le dispositif de traitement 5 peut comprendre des moyens aptes, lors de l'interruption du mouvement, à affecter la position de référence en tant que position initiale.

Bien que la description soit faite en relation avec un ensemble codeur/capteur magnétique, il est également possible de mettre en oeuvre l'invention de façon analogue en utilisant une technologie équivalente, par exemple de type optique. Par exemple, le codeur 3 peut être formé d'une cible en métal ou en verre sur laquelle la piste principale et éventuellement la piste top tour ont été gravées de sorte à former un motif optique analogue au motif magnétique multipolaire exposé ci-dessus, les éléments sensibles étant alors formés de détecteurs optiques.

Le système d'actionnement comprend en outre un dispositif de comparaison 6 de la position réelle du codeur 3, c'est-à-dire la position déterminée par le dispositif de traitement 5, avec la position du codeur 3 qui correspond théoriquement à la consigne appliquée. Le dispositif de comparaison 6 permet ainsi de sécuriser l'actionnement en vérifiant en temps réel la correspondance entre les mouvements du moteur électrique 1 et la consigne appliquée au calculateur 2.

Dans un exemple particulier, le dispositif de comparaison 6 est intégré dans le calculateur 2 et comprend un comparateur entre le signal de position issu du dispositif de traitement 5 et le signal de position issu de la consigne, l'intégration étant particulièrement simple et fiable du fait de la nature numérique des deux types de signaux.

Suivant un premier mode de réalisation, le dispositif de comparaison 6 comprend des moyens d'alerte qui, lors de la détermination d'un écart significatif entre la position réelle et la position théorique, sont agencés pour émettre un signal, par exemple lumineux ou sonore, d'anomalie de fonctionnement du système d'actionnement.

Le procédé d'actionnement de l'organe au moyen d'un tel système d'actionnement comprend alors les étapes itératives prévoyant de :
- appliquer au calculateur 2 une consigne de position de l'organe ;
- déterminer la position réelle du codeur 3 ;
- comparer la position réelle du codeur 3 avec la position du codeur 3 correspondant théoriquement à la consigne appliquée ;
- si l'écart entre la position réelle et la position théorique est supérieure à un seuil, activer les moyens d'alerte.

Suivant un deuxième mode de réalisation, le dispositif de comparaison 6 comprend, éventuellement en outre des moyens d'alerte, une boucle d'asservissement de l'actionnement qui est pilotée en fonction de l'écart déterminé entre la position réelle et la position théorique. Ainsi, une éventuelle anomalie de fonctionnement du système d'actionnement peut être corrigée en pilotant en temps réel le système de sorte à positionner le codeur 3 dans la position correspondant à la consigne. En variante, le dispositif de traitement 5 peut également être apte à délivrer des signaux représentatifs de la vitesse de déplacement du codeur 3, lesdits signaux pouvant être utilisés dans la boucle d'asservissement.

Le procédé d'actionnement de l'organe au moyen d'un tel système d'actionnement comprend alors les étapes itératives prévoyant de :
- appliquer au calculateur 2 une consigne de position de l'organe ;
- déterminer la position réelle du codeur 3 ;
- comparer la position réelle du codeur 3 avec la position du codeur 3 correspondant théoriquement à la consigne appliquée ;
- si l'écart entre la position réelle et la position théorique est supérieure à un seuil, piloter la boucle d'asservissement de sorte à appliquer au calculateur une consigne de position asservie à l'écart.

Dans les deux modes de réalisation décrits précédemment, le procédé peut le cas échéant comprendre une procédure préalable de détermination de la position initiale du codeur 3. En particulier, lors de la mise en service du système d'actionnement, la procédure peut prévoir d'alimenter le moteur électrique 1 en courant pour positionner le codeur 3 dans sa position de référence, ladite position de référence étant affectée dans le dispositif de traitement 5 en tant que position initiale de sorte à déterminer ultérieurement la position absolue du codeur 3.

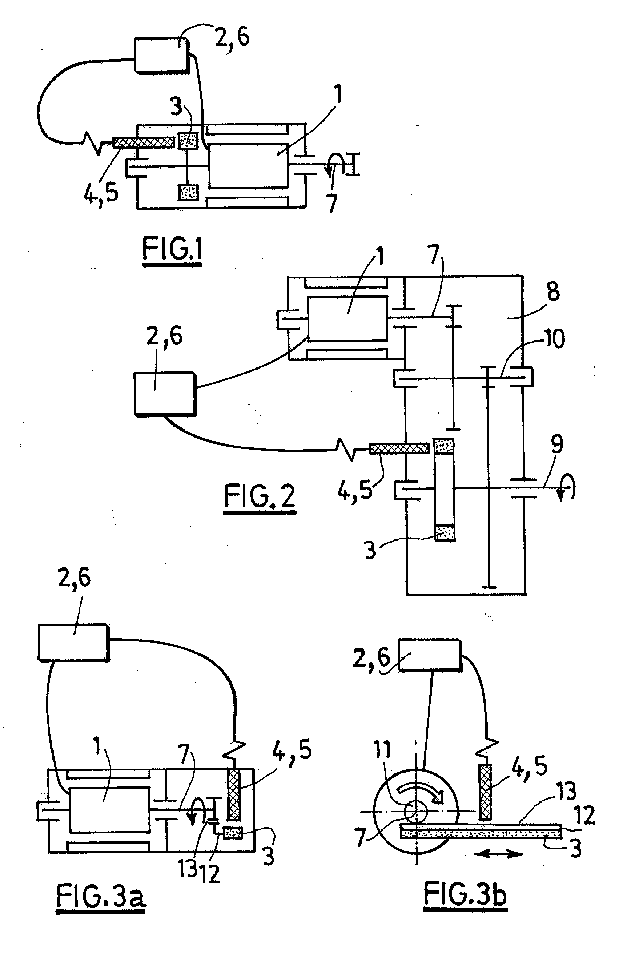

En relation avec les figures 1 et 2, on décrit un système d'actionnement en rotation d'un organe.

Suivant le mode de réalisation de la figure 1, le dispositif de transmission comprend le rotor 7 du moteur électrique 1, le codeur 3 étant monté sur une partie dudit rotor qui est opposée à l'organe à actionner.

Suivant le mode de réalisation de la figure 2, le dispositif de transmission comprend un réducteur 8 à deux étages, le codeur 3 étant monté sur le rotor de sortie 9 dudit réducteur. En variante, le codeur 3 peut également être monté sur le rotor 7 du moteur électrique 1 ou sur le rotor d'entrée 10 du réducteur 8.

Dans ces deux modes de réalisation, le codeur 3 et donc les pistes multipolaires sont circulaires, ledit codeur étant par exemple de forme annulaire et comprenant un alésage permettant son association sur le rotor 7, 9.

En relation avec les figures 3a et 3b, on décrit un système d'actionnement en translation d'un organe. A cet effet, le dispositif de transmission comprend le rotor 7 qui est pourvu d'un pignon 11 et une pièce 12 pourvue d'une crémaillère 13 qui sont agencés pour transformer le mouvement de rotation du rotor 7 en mouvement linéaire de la pièce 12, le codeur 3 étant associé à ladite pièce. En variante, la pièce 12 peut faire partie de l'organe à actionner.

Dans ce mode de réalisation, le codeur 3 et donc les pistes multipolaires sont linéaires, ledit codeur étant par exemple surmoulé sur la pièce 12.

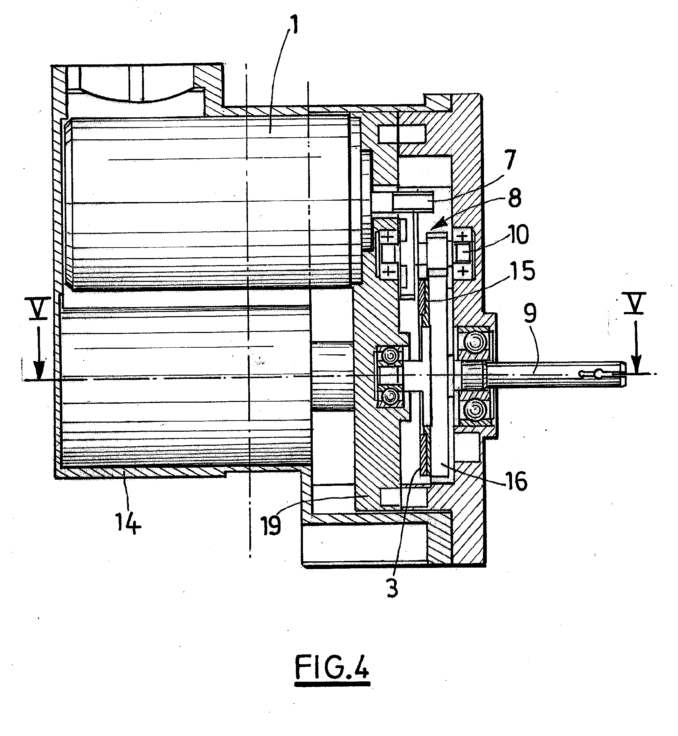

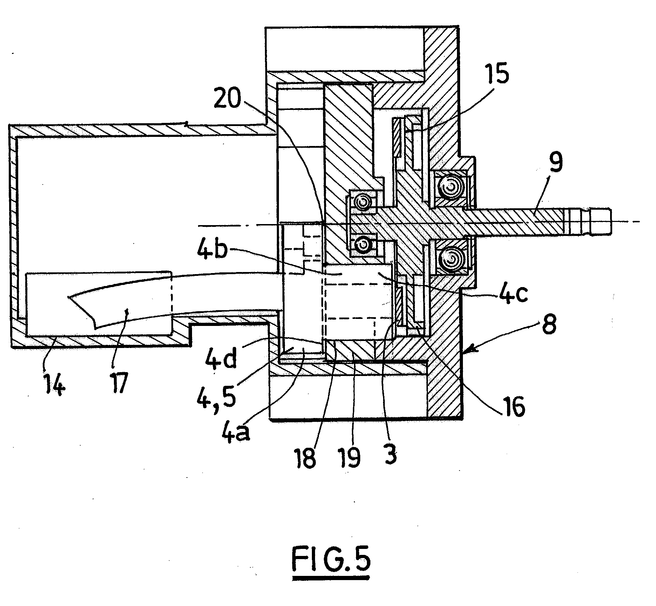

En relation avec les figures 4 et 5, on décrit un système d'actionnement pour doseur de carburant d'un moteur thermique qui correspond au schéma fonctionnel de la figure 2. A cet effet, le rotor de sortie 9 comprend une fente dans laquelle est destiné à être associé le volet d'alimentation du doseur de carburation (non représenté).

Le système d'actionnement comprend un carter 14 dans lequel le moteur 1 et le réducteur 8 sont logés de sorte à former un ensemble unitaire.

Le codeur 3 est fixé sur une portée annulaire 15 de la roue d'engrenage 16 qui est associée au rotor de sortie 9. Cette réalisation permet d'intégrer un codeur 3 de diamètre important, ce qui permet d'améliorer la précision de mesure de la position dudit codeur sans augmenter la taille du système d'actionnement ni nécessiter de pièces mécaniques supplémentaires.

Le capteur 4 est formé d'une pièce structural amagnétique dans laquelle les éléments sensibles et l'électronique associée sont logés, la connectique d'entrée/sortie du capteur, qui est formée d'un câble multiconducteurs 17 , saillant de ladite pièce pour permettre notamment la connexion dudit capteur au calculateur 2.

La pièce structurale amagnétique comprend une tête 4a sur une face latérale de laquelle s'étend un corps 4b, les éléments sensibles étant disposés au voisinage de la face latérale libre 4c du corps 4b et le câble 17 s'étendant depuis la face latérale de la tête 4a qui est opposée au corps 4b. La pièce est agencée pour que la tête 4a présente, du coté du corps, une surface latérale libre 4d.

Le capteur 4 est fixé dans un logement 18 du carter 19 du réducteur 8, ledit logement étant agencé pour recevoir le corps 4b en mettant en appui la surface latérale libre 4d contre la paroi périphérique dudit logement. Ainsi, les éléments sensibles sont placés de façon précise et fiable en regard et à distance d'entrefer du codeur 3 de sorte à pouvoir résister à des conditions d'utilisation sévères. En outre, une cale 20 peut être interposée entre la paroi périphérique du logement et la surface latérale libre 4d de sorte à pouvoir régler la distance d'entrefer.

## Revendications

1. Système d'actionnement du type comprenant un moteur électrique (1) commandé par un calculateur (2) qui est agencé pour réguler le courant d'alimentation du moteur (1) en fonction d'une consigne de position de l'organe à actionner, ledit système comprenant un dispositif de transmission du mouvement du moteur (1) à l'organe, ledit système étant **caractérisé en ce que** le dispositif de transmission comprend un codeur (3) solidaire du mouvement du moteur (1), ledit codeur comprenant une piste multipolaire principale, et **en ce que** le système comprend :
- un capteur (4) fixe comprenant au moins deux éléments sensibles qui sont disposés en regard et à distance d'entrefer de la piste principale, ledit capteur étant agencé pour délivrer deux signaux digitaux de position (A, B) carrés en quadrature qui sont représentatifs de la position du codeur (3) ;
- un dispositif de traitement (5) des signaux (A, B) qui comprend des moyens de comptage aptes à déterminer, à partir d'une position initiale, la position réelle du codeur (3) ;
- un dispositif de comparaison (6) de la position réelle du codeur (3) avec la position du codeur (3) qui correspond théoriquement à la consigne appliquée.

2. Système selon la revendication 1, **caractérisé en ce que** :
- le codeur (3) comprend en outre une singularité qui est indexée à une position de référence du codeur (3) ;
- le capteur (4) comprend en outre au moins un élément sensible agencé pour détecter ladite singularité ;
- le dispositif de traitement (5) comprend des moyens aptes, lors de la détection de la singularité, à affecter la position de référence en tant que position initiale.

3. Système selon la revendication 2, **caractérisé en ce que** le codeur (3) comprend en outre une piste multipolaire dite top tour qui est pourvue de la singularité, au moins un élément sensible étant disposé en regard et à distance d'entrefer de ladite piste top tour de sorte à délivrer un signal digital (C) comprenant une impulsion.

4. Système selon la revendication 3, **caractérisé en ce que** chaque piste multipolaire est formée d'un anneau magnétique sur lequel sont aimantés des pôles Nord et Sud équirépartis avec une largeur angulaire constante, la singularité magnétique de la piste top tour étant formée de deux pôles adjacents dont la transition magnétique est différente des autres.

5. Système selon l'une quelconque des revendications 1 à 4, **caractérisé en ce que** les éléments sensibles sont choisis dans le groupe comprenant les sondes à effet Hall, les magnétorésistances, les magnétorésistances géantes.

6. Système selon l'une quelconque des revendications 1 à 5, **caractérisé en ce que** le dispositif de transmission comprend le rotor (7) du moteur (1), sur lequel est monté le codeur (3).

7. Système selon l'une quelconque des revendications 1 à 5, **caractérisé en ce que** le dispositif de transmission comprend un réducteur (8) sur un rotor (9) duquel le codeur (3) est monté.

8. Système selon l'une quelconque des revendications 1 à 5, **caractérisé en ce que** le dispositif de transmission comprend un rotor (7) pourvu d'un pignon (11) et une pièce (12) pourvue d'une crémaillère (13) qui sont agencés pour transformer le mouvement de rotation du rotor (7) en mouvement linéaire de la pièce (12), le codeur (3) étant associé à ladite pièce.

9. Système selon l'une quelconque des revendications 1 à 8, **caractérisé en ce que** le dispositif de transmission comprend une butée qui est agencée pour interrompre le mouvement du moteur (1) dans une position de référence du codeur (3), et **en ce que** le dispositif de traitement (5) comprend des moyens aptes, lors de l'interruption du mouvement, à affecter la position de référence en tant que position initiale.

10. Système selon l'une quelconque des revendications 1 à 9, **caractérisé en ce que** le dispositif de comparaison (6) comprend des moyens d'alerte qui, lors de la détermination d'un écart significatif entre la position réelle et la position théorique, sont agencés pour émettre un signal d'anomalie de fonctionnement du système d'actionnement.

11. Système selon l'une quelconque des revendications 1 à 10, **caractérisé en ce que** le dispositif de comparaison (6) comprend une boucle d'asservissement de l'actionnement qui est pilotée en fonction de l'écart déterminé entre la position réelle et la position théorique.

12. Procédé d'actionnement d'un organe au moyen d'un système selon la revendication 10, **caractérisé en ce qu'**il comprend les étapes itératives prévoyant de :
- appliquer au calculateur (2) une consigne de position de l'organe ;
- déterminer la position réelle du codeur (3) ;
- comparer la position réelle du codeur (3) avec la position du codeur (3) correspondant théoriquement à la consigne appliquée ;
- si l'écart entre la position réelle et la position théorique est supérieure à un seuil, activer les moyens d'alerte.

13. Procédé d'actionnement d'un organe au moyen d'un système selon la revendication 11, **caractérisé en ce qu'**il comprend les étapes itératives prévoyant de :
- appliquer au calculateur (2) une consigne de position de l'organe ;
- déterminer la position réelle du codeur (3) ;
- comparer la position réelle du codeur (3) avec la position du codeur (3) correspondant théoriquement à la consigne appliquée ;
- si l'écart entre la position réelle et la position théorique est supérieure à un seuil, piloter la boucle d'asservissement de sorte à appliquer au calculateur (2) une consigne de position asservie à l'écart.

14. Procédé selon la revendication 12 ou 13 lorsqu'elle dépend de la revendication 2 ou 9, **caractérisé en ce qu'**il comprend une procédure préalable de détermination de la position initiale du codeur (3), dans laquelle le moteur (1) est alimenté en courant pour positionner le codeur (3) dans sa position de référence, ladite position de référence étant affectée dans le dispositif de traitement (5) en tant que position initiale.

15. Application d'un système selon l'une quelconque des revendications 1 à 11, pour l'actionnement d'un doseur de carburant d'un moteur thermique.
